# EUROPÄISCHE PATENTSCHRIFT

(11) **EP 3 339 053 B1**
(45) Veröffentlichungstag und Bekanntmachung des Hinweises auf die Patenterteilung: **06.04.2022**
(21) Anmeldenummer: 17203185.8
(22) Anmeldetag: 23.11.2017
(51) Int. Cl.: B60B 3/16, B60B 11/06, F16B 21/16, B60B 3/14

(54) **MANUELL BETÄTIGBARE VERRIEGELUNGSEINRICHTUNG**
MANUALLY ACTUATED LOCKING DEVICE
DISPOSITIF DE VERROUILLAGE POUVANT ÊTRE ACTIONNÉ MANUELLEMENT

(30) Priorität: 23.12.2016 DE 202016107318 U
(43) Veröffentlichungstag der Anmeldung: 27.06.2018
(73) Patentinhaber: Resbig Technology GmbH, 65817 Eppstein (DE)
(72) Erfinder: Stock, Bernd, 65340 Flörsheim (DE)
(74) Vertreter: Habermann Intellectual Property Partnerschaft von Patentanwälten mbB

(56) Entgegenhaltungen:
- DE-C1- 3 337 797
- US-A- 4 392 759
- US-A- 4 963 052

## Beschreibung

Die Erfindung betrifft eine Verriegelungseinrichtung zum lösbaren Arretieren mit einem Gegenkörper, mit einem Grundelement, welches zusammen mit einem Aufbauelement und einem Verbindungselement, vorzugsweise mittels Schrauben, miteinander verbunden ist, und einem Betätigungsmittel, wobei an dem Betätigungsmittel ein oder mehrere Schlitten befestigt sind, wobei durch eine Betätigung des Betätigungsmittels das Betätigungsmittel mit den daran befestigten einen oder mehreren Schlitten eine relative Bewegung zur Verriegelungseinrichtung durchführen und von einer Entriegelungsposition in eine Verriegelungsposition verlagert werden kann, wobei die ein oder mehrere Schlitten in Kontakt mit einem oder mehreren Verriegelungsmitteln sind und diese in eine Gegengeometrie des Gegenkörpers überführbar sind, wenn das Betätigungsmittel in die Verriegelungsposition verlagert wird, und wobei das Betätigungsmittel durch Rückstellfedern der Verriegelungsmittel und der daraus resultierenden Spannung sowie eines Reibungswiederstandes zwischen dem einen oder mehreren Verriegelungsmitteln und dem einen oder mehreren Schlitten in seiner jeweiligen Lage in der Entriegelungsposition oder in der Verriegelungsposition verbleibt.

Aus dem Stand der Technik ist der Einsatz von Verriegelungseinrichtungen zum Verbinden wenigstens zweier Bauteile aus einer Vielzahl von Technikbereichen bekannt. Beispielsweise ist bekannt, dass eine Befestigung von Radfelgen und damit einem Rad auf Radachsen mittels mehrerer Verschraubungen erfolgt. Die Verschraubungen werden kreisförmig um die Mittelachse auf der Radachse angeordnet. Bei Sportwagen ist bekannt, dass die Verbindung mittels einer einzigen zentralen Mutter oder Schraube erfolgt. In DE 61 00 25 A und DE 62 53 10 A werden alternative Verbindungsarten offenbart, in denen eine Verbindung der Radfelge mit der Radachse durch Verklemmen eines Klemmstücks erzielt wird.

Die oben genannten Verriegelungseinrichtungen weisen den Nachteil auf, dass die Verbindung zwischen den Bauteilen zeitaufwendig ist, wenn drei bis fünf oder mehr Schrauben oder Muttern gelöst und wieder korrekt montiert werden können. Ferner besteht ein Nachteil darin, dass zum Verbinden der Schrauben oder Muttern ein Werkzeug, wie ein Drehmomentschlüssel, notwendig ist, welcher nicht immer zur Verfügung steht. Zudem ist ein hoher Kraftaufwand notwendig, um die Schrauben oder Muttern zu befestigen.

Eine weitere Verriegelungseinrichtung ist beispielsweise aus der DE 19 59 884 A bekannt. Dort ist ein Schnellverschluss für Sicherheitsgurte in Kraftfahrzeugen offenbart, der einen Grundelement und ein Verriegelungsmittel zum Verriegeln des Grundelements mit einem Gegenkörper aufweist. Der Schnellverschluss besteht aus einer Hülse und einem in diese einsteckbaren Sperrzapfen mit Organen zur Zusammenwirkung mit in der Hülse angeordneten Sperrkugeln, die durch eine federbelastete Hülse in nicht sperrender Lage gehalten werden, und bei Einführung des Sperrzapfens in die Hülse auf Sperreingriff mit dem Sperrzapfen geführt werden. Weiterhin ist ein Sicherheitsorgan vorgesehen, welches ein Verschieben der Hülse mittels eines anderen Organs als des Sperrzapfens verhindert.

Allerdings besitzt dieser Schnellverschluss den Nachteil, dass bei einer Betätigung des Betätigungsmittels dieses nicht selbsttätig in eine Verriegelungsposition überführt wird. Vielmehr erfolgt die Verriegelung derart, dass in der Bereitschaftsstellung des Verschlusses der Sperrzapfen in die Hülse eingesteckt wird. Dann verschiebt der Kopf die Hülse in Richtung nach unten. Sobald die Hülse mit ihrer Oberkante unter die querlaufenden Bohrungen gelangt ist, legt sie die Sperrkugeln frei, sodass diese, wenn auch der Kopf des Sperrzapfens an den Bohrungen vorbeigeführt worden ist, von der Feder durch Mitwirkung des Ringes in die Ausnehmung gepresst werden. Dann befindet sich der Schnellverschluss in der Sperrlage.

Auch wird das Betätigungsmittel durch die Verschiebevorrichtung nicht erst nach Überschreiten eines Totpunkts selbsttätig in die Verriegelungsposition bewegt.

Beispielsweise aus US 4 392 759 A ist eine Verriegelungseinrichtung der eingangs genannten Gattung beschrieben, die einen Schnellverschluss für eine lösbare Kupplung von zwei Wellenabschnitten aufweist, die für eine Übertragung eines Drehmoments verwendet werden. Dabei kann ein Betätigungsmittel mit einem Bajonettverschluss an einem ersten Wellenabschnitt verlagert werden, um über eine axiale Verlagerung eines an dem Bajonettverschlusselement ausgebildeten ringförmigen Schlittens mehrere Verriegelungsmittel radial nach innen und damit in Eingriff mit dem zweiten Wellenabschnitt zu bringen, der dadurch an dem ersten Wellenabschnitt festgelegt ist. Durch eine entgegengesetzte Verlagerung des Bajonettverschlusselements und des daran ausgebildeten ringförmigen Schlittens können die Verriegelungselemente mit Hilfe einer Federeinrichtung wieder radial nach außen zurückverlagert werden und die Verriegelung des ersten Wellenabschnitts mit dem zweiten Wellenabschnitt aufheben bzw. lösen. Das Bajonettverschlusselement wird im Wesentlichen durch die Zwangsführung des Bajonettverschlusses in einer Verriegelungsposition gehalten, weshalb nicht ausgeschlossen ist, dass sich das Bajonettverschlusselement beispielsweise bei einer länger andauernden wechselnden Beanspruchung oder bei einer Vibrationsbewegung eventuell lösen und zurück in eine Ausgangsposition verlagert, sodass die drehfeste Verbindung zwischen den beiden Wellenabschnitten nicht mehr zuverlässig gewährleistet ist.

Es ist Aufgabe der Erfindung, eine manuell betätigbare Verriegelungseinrichtung zu schaffen, die einfach handhabbar ist und eine Verbindung zwischen wenigstens zwei zu verbindenden Bauteilen ermöglicht, ohne dass die zuvor genannten Nachteile auftreten.

Diese Aufgabe wird dadurch gelöst, dass als Sekundärsicherung eine selbsttätige Sicherheitseinrichtung, ausgebildet als federbelasteter Sicherungsbolzen, zur Positionssicherung des Betätigungsmittels vorgesehen ist und ein unbeabsichtigtes Öffnen der Verriegelungseinrichtung verhindert.

In der Verriegelungsposition ist das Betätigungsmittel mit den verbundenen Schlitten mit dem Verriegelungsmittel in Kontakt und überführt dieses in eine Verriegelungsstellung.

Vorteilhafte Ausgestaltungen der Erfindung sind Gegenstand der abhängigen Ansprüche.

Um eine Bewegung des Verriegelungsmittels zum und weg vom Gegenkörper zu gewährleisten, weist der wenigstens eine Schlitten eine schräg geneigte, zu dem jeweiligen Verriegelungsmittel gerichtete Oberflächenform aufweist. Dies trifft auch zu, wenn mehr als ein Schlitten vorgesehen sind.

Des Weiteren weist das Verbindungselement zumindest eine Aussparung auf, in die das Betätigungsmittel, insbesondere der Schlitten, zum Überführen des Verriegelungsmittels in die Verriegelungsstellung wenigstens teilweise eindringt.

Ferner weist das Grundelement ein Sackloch oder ein Durchgangsloch auf, in welches der Gegenkörper wenigstens teilweise eindringbar ist. Bevorzugt besitzt das Sackloch oder Durchgangsloch eine Rundform oder Vieleckform und ein Endabschnitt des Gegenkörpers kann die hierzu passende Rundform oder vieleckige Form aufweisen.

Darüber hinaus weist der Gegenkörper eine insbesondere umlaufende Nut auf, in die das Verriegelungsmittel zum Verriegeln eindringt. Vorzugsweise sind die Kontaktflächen des Sacklochs oder Durchgangslochs des Grundelementes zur umlaufende Nut des Gegenkörpers als Gleitlager ausgeführt.

Das Grundelement kann mit einer Radfelge oder einer Radaufnahme eines Fahrzeuges verbunden werden.

Eine derart ausgebildete Verriegelungseinrichtung weist den Vorteil auf, dass zur Erzielung der Verbindung zwischen dem Grundelement und dem Gegenkörper nicht eine Vielzahl von Befestigungsmitteln, wie beispielsweise Schrauben oder Muttern, eingesetzt werden müssen. Die Verbindung kann durch Betätigung eines einzigen Betätigungsmittels realisiert werden, wodurch sich der Zeitaufwand reduziert. Ein weiterer Vorteil der Verriegelungseinrichtung ist, dass keine Werkzeuge mehr notwendig sind, da das Betätigungsmittels durch den Anwender per Hand betätigt werden kann. Durch die Verriegelungseinrichtung kann eine sichere, lösbare mechanische Verbindung zwischen zweien Bauteilen hergestellt werden. Insbesondere kann die Verriegelungseinrichtung zur Verbindung von starren sowie drehbaren Bauteilen eingesetzt werden und kann große mechanische Kräfte, sowie Drehmomente sicher übertragen.

Durch das Vorsehen einer Verschiebevorrichtung, die das Betätigungsmittel selbsttätig in die Verriegelungsposition bewegt, ist kein hoher Kraftaufwand zum Verbinden des Grundelementes mit dem Gegenkörper mehr notwendig. Ferner ist sichergestellt, dass der Grundelement immer mit der gleichen Kraft auf dem Gegenkörper fixiert ist, wodurch ein Verbindungsvorgang mit hoher Wiederholungsgenauigkeit garantiert ist. Damit benötigt der Anwender keinerlei Wissen beispielsweise über das vom Hersteller vorgeschriebene Anzugsdrehmoment. Zudem ermöglicht die Verriegelungseinrichtung eine präzise, sichere und zeitlich begrenzte oder dauerhafte Verbindung zwischen Grundelement und dem Gegenkörper. Insbesondere verhindert die Verriegelungseinrichtung, dass im Betrieb eine ungewollte Lösung der Verbindung zwischen dem Grundelement und dem Gegenkörper erfolgt, die ein Überprüfen der Verbindung beispielsweise nach einer bestimmten Zeitdauer erfordert.

Die Verriegelungseinrichtung kann zum Verbinden von wenigstens zwei Bauteilen dienen. Das Grundelement kann mit einem ersten Bauteil und der Gegenkörper mit einem zweiten Bauteil verbunden sein. Die lösbare Verbindung lässt sich durch beispielsweise eine Schraubverbindung realisieren.

Die Verriegelungseinrichtung kann insbesondere im Fahrzeugbereich eingesetzt werden. In diesem Fall kann das Grundelement mit einer Radfelge oder einer Radaufnahme, wie beispielsweise eine Radachse oder Radnabe, als erstes Bauteil einstückig oder lösbar verbunden sein. Dementsprechend kann der Gegenkörper mit der Radaufnahme oder der Radnabe als zweites Bauteil einstückig oder lösbar verbunden sein. Natürlich ist der Einsatz der Verriegelungseinrichtung nicht auf den Einsatz im Fahrzeugbereich begrenzt. Alternativ kann die Verriegelungseinrichtung auch zur Montage in Herstellungs- oder Fertigungsprozessen eingesetzt werden.

Im Sinne der Erfindung wird als Verriegelungsstellung des Verriegelungsmittels diejenige Stellung verstanden, in der das Verriegelungsmittel das Grundelement und den Gegenkörper verriegelt und/oder miteinander verbindet. Ferner wird im Sinne der Erfindung als selbsttätige Bewegung des Betätigungsmittels eine Bewegung des Betätigungsmittels verstanden, die durch die Verschiebevorrichtung bewirkt wird.

Natürlich kann der Anwender die Bewegung des Betätigungsmittels durch ein Betätigen des Betätigungsmittels zusätzlich zu der Kraftausübung durch die Verschiebevorrichtung unterstützen.

Des Weiteren wirkt die Verschiebevorrichtung einer Bewegung des unbetätigten Betätigungsmittels aus der Entriegelungsposition in die Verriegelungsposition oder umgekehrt entgegen. Dadurch wird erreicht, dass das Betätigungsmittel sich nicht selbstständig ohne Krafteinwirkung durch den Anwender oder die Verschiebevorrichtung sich nicht durch die Eigengewichtskraft oder Fliehkraft oder andere, äußere mechanische Kräfte bewegen kann. Im Ergebnis wird erreicht, dass das Betätigungsmittel in der aktuellen Stellung verharrt.

Die Verbindung bzw. Verriegelung zwischen dem Grundelement und dem Gegenkörper kann nur ausgelöst werden, wenn eine Auslösekraft, insbesondere eine von dem Benutzer ausgeübte Kraft, nach dem Hebelgesetz größer ist, als eine Kraft, die im Ruhezustand wirkt.

Das Betätigungsmittel weist wenigstens einen Schlitten zum Überführen des Verriegelungsmittels in die Verriegelungsstellung aufweisen. Der oder die Schlitten kann/können einstückig mit dem Betätigungsmittel ausgebildet sein. Der oder die Schlitten kann/können in Axialrichtung des Betätigungsmittels vorstehen. Beim Vorsehen von mehreren Schlitten können diese in Umfangsrichtung des Betätigungsmittels benachbart zueinander angeordnet sein.

Das oder die Verriegelungsmittel kann/können im Grundelement, insbesondere in einem oder mehreren Loch/Löchern/Aussparungen des Grundelements, angeordnet sein. Ferner kann der Grundelement eine oder mehrere Aussparung/en aufweisen, in die das oder die Betätigungsmittel, insbesondere der oder die Schlitten, zum Überführen des oder der Verriegelungsmittel/s in die Verriegelungsstellung wenigstens teilweise eindringt/eindringen.

Ferner können das Betätigungsmittel und/oder der Schlitten des Betätigungsmittels derart ausgebildet sein, dass diese in der Verriegelungsposition mit dem Verriegelungsmittel, insbesondere unmittelbar, in Kontakt ist/sind und diese in die Verriegelungsstellung überführt, insbesondere drückt. Der zu dem Verriegelungsmittel weisende Teil des Betätigungsmittels und/oder Schlittens kann schräg ausgebildet sein. Auf diese Weise kann ein einfaches Überführen bzw. Drücken des Verriegelungsmittels in die Verriegelungsstellung erreicht werden.

Das jeweilige Verriegelungsmittel kann ein zylindrischer oder kugelförmiger Körper sein. Natürlich kann das Verriegelungsmittel auch eine andere Form aufweisen, solange sichergestellt ist, dass das Verriegelungsmittel eine Verriegelung zwischen dem Grundelement und dem Gegenkörper sicherstellen kann.

Weiterhin weist die Verriegelungseinrichtung eine Sicherungsvorrichtung auf. Die Sicherungsvorrichtung dient zum Sichern des Betätigungsmittels in der Verriegelungsposition. Durch das Vorsehen der Sicherungsvorrichtung wird verhindert, dass sich das Betätigungsmittel ungewollt aus der Verriegelungsposition in die Entriegelungsposition bewegt und damit die Verbindung löst. Die Sicherungsvorrichtung ist ein durch Federkraft automatisch herauseilender Sicherungsbolzen. Der Sicherungsbolzen kann durch einen Anwender betätigt werden.

In einer besonderen Ausführung, kann das Grundelement ein Durchgangsloch aufweisen, in welches der Gegenkörper wenigstens teilweise eindringen kann. Der Gegenkörper dringt in das Durchgangsloch ein, wenn eine Verriegelung und somit Verbindung zwischen dem Grundelement und dem Gegenkörper realisiert werden soll.

Das Verriegelungsmittel kann derart in dem Grundelement platziert sein, dass dieses in der Verriegelungsstellung in den Hohlraum des Grundelements, insbesondere in radialer Richtung, eingreift. Dabei kann sich das Verriegelungsmittel in der Aussparung bewegen und in eine am äußeren Umfang des Gegenkörpers angebrachte Nut des Gegenkörpers wenigstens teilweise eindringen oder eingreifen. Hierbei ist die Nut an dem Gegenkörper derart angeordnet, dass sich diese bei in das Grundelement eingedrungenem Gegenkörper gegenüber der Aussparung und dem darin befindlichen Verriegelungsmittel befindet. Die Nut kann sich vollständig oder teilweise um den Gegenkörper erstrecken.

Der dieser Erfindung zugrunde liegende Gedanke wird in der nachfolgenden Beschreibung anhand eines Ausführungsbeispiels, das in den Zeichnungen dargestellt ist, näher beschrieben.

Es zeigen:
- Fig. 1:: einen Längsschnitt einer erfindungsgemäßen Verriegelungseinrichtung im, geöffneten Zustand mit einem Gegenkörper,
- Fig. 2:: einen Längsschnitt einer erfindungsgemäßen Verriegelungseinrichtung im, geschlossenen Zustand mit einem Gegenkörper,
- Fig. 3:: eine Seitenansicht des in den Fig. 1 und 2 Gegenkörpers, und
- Fig. 4:: eine Draufsicht des in der Verriegelungseinrichtung eingesetzten Verbindungselementes.

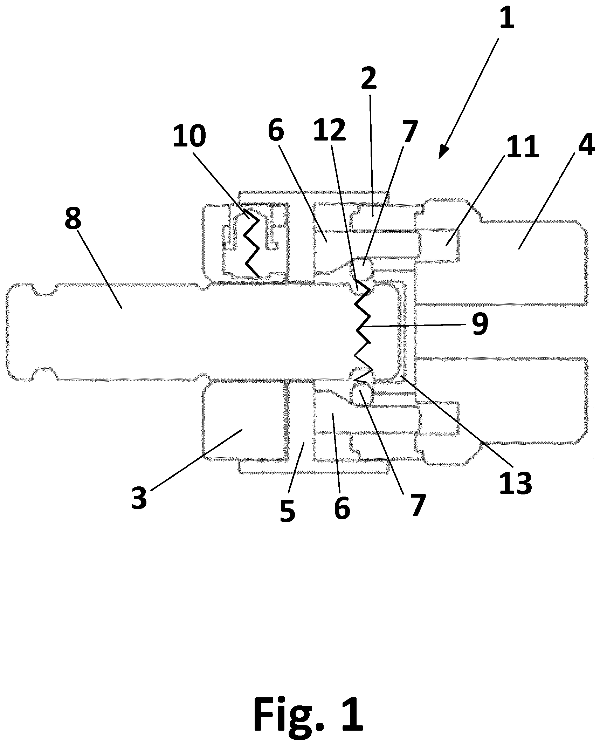

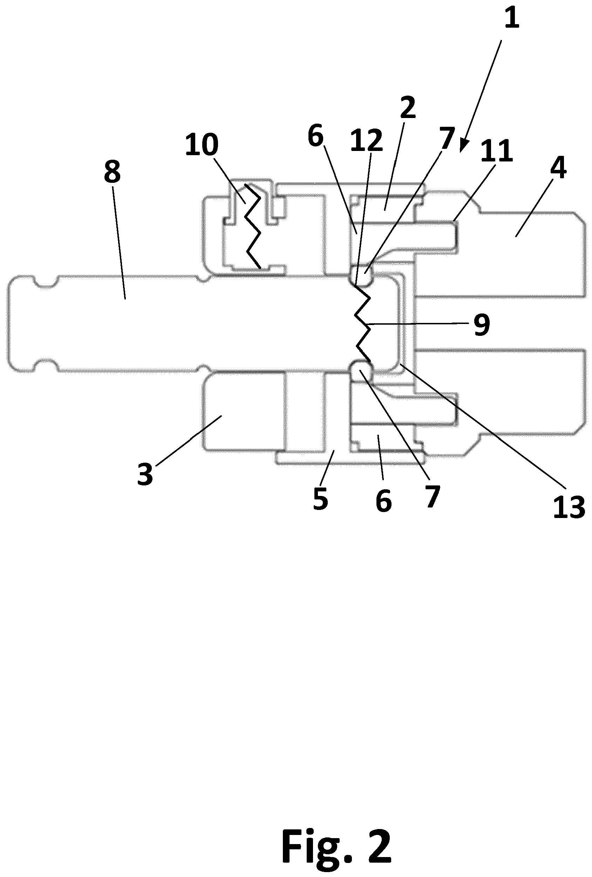

Die in den Fig. 1 und 2 gezeigte Verriegelungseinrichtung dient zum lösbaren Arretieren eines Gegenkörpers.

Die Verriegelungseinrichtung 1 besitzt ein Grundelement 2, welches zusammen mit einem Aufbauelement 3 und einem Verbindungselement 4, vorzugsweise mittels Schrauben, miteinander verbunden ist. Weiterhin umfasst die Verriegelungseinrichtung 1 ein Betätigungsmittel 5, das mit einer Sicherungsvorrichtung verbunden ist, die einen gefederten Sicherungsbolzen 10 aufweist. Dieser ist an einer Außenseite eines Aufbauelements 3 lösbar und manuell betätigbar angeordnet. Das Betätigungsmittel 5 ist relativ zum Grundelement 2 in Längsrichtung bewegbar.

Ferner weist das Betätigungsmittel 5 an der von der Sicherungsvorrichtung entfernten Seite, also der dem Grundelement 2 zugewandten Seite, in Axialrichtung des Betätigungsmittels 5 vorragende Schlitten 6 auf. Diese Schlitten 6 sind fest oder beweglich mit dem Betätigungsmittel 5 verbunden. Jeder Schlitten 6 weist eine schräg geneigte, zu dem jeweils zugehörigen Verriegelungsmittel 7 gerichtete Oberflächenform auf. Die Verriegelungsmittel 7 werden durch zugehörige Rückstellfedern 9, vorzugsweise Druckfedern, in ihrer Lage gemäß Fig. 1 gehalten.

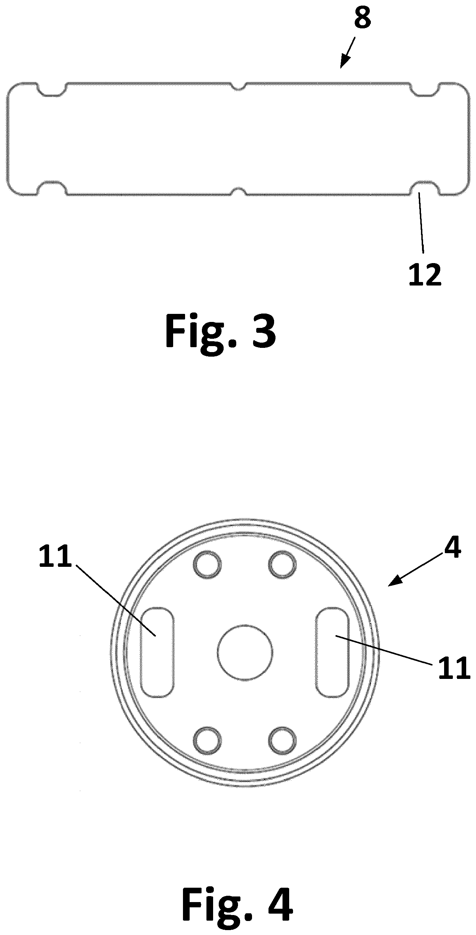

Das Grundelement 2 kann mit einem in Fig. 3 gezeigten bolzenartigen Gegenkörper 8 lösbar verbunden werden. Das in Fig. 4 dargestellte Verbindungselement 4 weist Aussparungen 11 auf, in die bei einem Betätigen des Betätigungsmittels 10 die Schlitten 6 eingreifen können, wie in Fig. 2 im geschlossenen Zustand der Verrieglungseinrichtung 1 dargestellt ist. Selbstverständlich können die Schlitten 6 bei einem Entriegeln aus den Aussparungen 11 wieder austreten, wie in Fig. 1 im geöffneten Zustand der Verrieglungseinrichtung 1 dargestellt ist.

In der beispielhaften Darstellung gemäß den Fig. 1 und 2 sind zwei Schlitten 6 vorhanden, wobei jedoch auch mehr als zwei Schlitten vorhanden sein können.

Die Verriegelungseinrichtung 1 kann mit einem in Figur 2 und 3 dargestellten Gegenkörper 8 verbunden werden. Der Gegenkörper 8 weist eine umlaufende Nut 12 auf, in die das Verriegelungsmittel 7 beim Verriegeln eindringt. Zudem besitzt das Grundelement 2 ein Sackloch oder ein Durchgangsloch 13, in welches der Gegenkörper 8 wenigstens teilweise eindringbar ist und somit die Verriegelungsmittel 7 in radialer Richtung in die Nut 12 gedrückt werden können.

In dem Grundelement 2 sind die beweglichen Verriegelungsmittel 7, beispielsweise in Form einer Kugel, vorgesehen. Das Verriegelungsmittel 7 ist in einem Loch des Grundelements 2 angeordnet, wobei das Loch mit der Aussparung 11 verbunden ist. In diese Aussparung 11 ragt der Schlitten 6, welcher an dem Betätigungsmittel 5 mechanisch fest oder beweglich befestigt ist, oder alternativ Teil des Betätigungsmittels 5 ist.

In den Fig. 1 und 2 ist die Verriegelungseinrichtung 1 in einer Stellung dargestellt, in der diese mit dem Gegenkörper 8 verbunden ist. Der Gegenkörper 8 ist in dem Durchgangsloch 13 angeordnet. Das Betätigungsmittel 5 befindet sich gemäß Fig. 2 in einer Verriegelungsposition, in der die Schlitten 6 des Betätigungsmittels 5 in Kontakt mit dem Verriegelungsmittel 7 sind. Die Schlitten 6 drücken das Verriegelungsmittel 7 in die Verriegelungsstellung. In dieser greift das Verriegelungsmittel 7 in die Nut 12 des Gegenkörpers 8 ein.

Im Folgenden wird der Verbindungsvorgang im Detail erörtert, wobei von der in Fig. 1 dargestellten Stellung ausgegangen wird, in der die Verriegelungseinrichtung 1 mit dem Gegenkörper 8 nicht verbunden ist.

In der in Fig. 1 dargestellten Stellung befindet sich das Betätigungsmittel 5 in der Entriegelungsposition.

Damit eine Verbindung bzw. Verriegelung zwischen der Verriegelungseinrichtung 1 und dem Gegenkörper 8 hergestellt wird, muss der Anwender die Verriegelungseinrichtung 1 auf den Gegenkörper 8 aufsetzen. Anschließend muss der Anwender auf das Betätigungsmittel 5 eine Kraft ausüben, die das Betätigungsmittel in axialer Richtung zum Grundelement 2 und somit in die Verriegelungsposition verschiebt.

In der Verriegelungsposition sind die Schlitten 6 des Betätigungsmittels 5 mit dem jeweiligen Verriegelungsmittel 7 in Kontakt. Insbesondere drücken die Schlitten 6 das Verriegelungsmittel 7 in radialer Richtung aus dem Grundelement 2 hinaus. Da der Gegenkörper 8 in dem Durchgangsloch 13 angeordnet ist, greifen die Verriegelungsmittel 7 wenigstens teilweise in die Nut 12 des Gegenkörpers 8.

Durch das Eingreifen der Verriegelungsmittel 7 in die Nut 12 kann eine Verbindung und Verriegelung zwischen der Verriegelungseinrichtung 1 und dem Gegenkörper 8 realisiert werden. Dementsprechend kann eine Verbindung und Verriegelung zwischen einem ersten Bauteil, wie der Radfelge, das mit der Verriegelungseinrichtung 1 verbunden ist und einem zweiten Bauteil, wie beispielsweise einer nicht dargestellten Radaufnahme oder Radnabe, realisiert werden.

### Bezugszeichenliste

- 1: Verriegelungseinrichtung
- 2: Grundelement
- 3: Aufbauelement
- 4: Verbindungselement
- 5: Betätigungsmittel
- 6: Schlitten
- 7: Verriegelungsmittel
- 8: Gegenkörper
- 9: Rückstellfeder
- 10: Gefederter Sicherungsbolzen
- 11: Aussparung
- 12: Nut
- 13: Sackloch; Durchgangsloch

## Patentansprüche

1. Verriegelungseinrichtung (1) zum lösbaren Arretieren mit einem Gegenkörper (8), mit einem Grundelement (2), welches zusammen mit einem Aufbauelement (3) und einem Verbindungselement (4), vorzugsweise mittels Schrauben, miteinander verbunden ist, und einem Betätigungsmittel (5), wobei an dem Betätigungsmittel (5) ein oder mehrere Schlitten (6) befestigt sind, wobei durch eine Betätigung des Betätigungsmittels (5) das Betätigungsmittel (5) mit den daran befestigten einen oder mehreren Schlitten (6) eine relative Bewegung zum Grundelement (2) durchführen und von einer Entriegelungsposition in eine Verriegelungsposition verlagert werden kann, wobei die ein oder mehrere Schlitten (6) in Kontakt mit einem oder mehreren Verriegelungsmitteln (7) sind und diese in eine Gegengeometrie des Gegenkörpers (8) überführbar sind, wenn das Betätigungsmittel (5) in die Verriegelungsposition verlagert wird, und wobei das Betätigungsmittel (5) durch Rückstellfedern (9) der Verriegelungsmittel (7) und der daraus resultierenden Spannung sowie eines Reibungswiederstandes zwischen dem einen oder mehreren Verriegelungsmitteln (7) und dem einen oder mehreren Schlitten (6) in seiner jeweiligen Lage in der Entriegelungsposition oder in der Verriegelungsposition verbleibt, wobei als Sekundärsicherung eine selbsttätige Sicherheitseinrichtung, ausgebildet als federbelasteter Sicherungsbolzen (10), zur Positionssicherung des Betätigungsmittels (5) vorgesehen ist und ein unbeabsichtigtes Öffnen der Verriegelungseinrichtung (1) verhindert.

2. Verriegelungseinrichtung (1) nach Anspruch 1, **dadurch gekennzeichnet, dass** das Verriegelungsmittel (7) im Grundelement (2) angeordnet ist.

3. Verriegelungseinrichtung (1) nach den Ansprüchen 1 und 2, **dadurch gekennzeichnet, dass** der wenigstens eine Schlitten (6) eine schräg geneigte, zu dem jeweiligen Verriegelungsmittel (7) gerichtete Oberflächenform aufweist.

4. Verriegelungseinrichtung (1) nach Anspruch 1, **dadurch gekennzeichnet, dass** das Verbindungselement (4) zumindest eine Aussparung (11) aufweist, in die das Betätigungsmittel (5), insbesondere der Schlitten (6), zum Überführen des Verriegelungsmittels (7) in die Verriegelungsstellung wenigstens teilweise eindringt.

5. Verriegelungseinrichtung (1) nach Anspruch 1, **dadurch gekennzeichnet, dass** das Grundelement (2) ein Sackloch oder ein Durchgangsloch (13) aufweist, in welches der Gegenkörper (8) wenigstens teilweise eindringbar ist.

6. Verriegelungseinrichtung (1) nach Anspruch 5, **dadurch gekennzeichnet, dass** dieses Sackloch oder Durchgangsloch (13) eine Rundform oder Vieleckform besitzt und ein Endabschnitt des Gegenkörpers (8) die hierzu passende Rundform oder vieleckige Form aufweisen kann.

7. Verriegelungsanordnung nach Anspruch 1, **dadurch gekennzeichnet, dass** der Gegenkörper (8) eine insbesondere umlaufende Nut (12) aufweist, in die das Verriegelungsmittel (7) zum Verriegeln eindringen kann.

8. Verriegelungsanordnung nach den Ansprüchen 5 bis 7, **dadurch gekennzeichnet, dass** die Kontaktflächen des Sacklochs bzw. Durchgangslochs (13) des Grundelementes (2) zur umlaufende Nut (12) des Gegenkörpers (8) als Gleitlager ausgeführt sind.

9. Verriegelungseinrichtung (1) nach Anspruch 1, **dadurch gekennzeichnet, dass** das Grundelement (2) mit einer Radfelge oder einer Radaufnahme verbindbar ist.

## Claims

1. Locking device (1) for releasable locking with a counter body (8), having a base body (2), which is connected together with an add-on element (3) and a connecting element (4), preferably by means of screws, and having an actuating means (5), wherein one or more slides (6) are fastened to the actuating means (5), wherein, by actuation of the actuating means (5), the actuating means (5) with the one or more slides (6) fastened thereto can carry out a movement relative to the base element (2) and be displaced from an unlocking position into a locking position, wherein the one or more slides (6) are in contact with one or more locking means (7) and the locking means can be transferred into a counter geometry of the counter body (8) when the actuating means (5) is displaced into the locking position, and wherein the actuating means (5) remains in its respective position in the unlocking position or in the locking position by means of return springs (9) of the locking means (7) and the tension resulting therefrom and a frictional resistance between the one or more locking means (7) and the one or more slides (6), wherein an automatic safety device, in the form of a spring-loaded securing bolt (10), for securing the position of the actuating means (5) is provided as secondary securing and prevents accidental opening of the locking device (1).

2. Locking device (1) according to claim 1, **characterised in that** the locking means (7) is arranged in the base element (2).

3. Locking device (1) according to claims 1 and 2, **characterised in that** the at least one slide (6) has a sloping surface form directed towards the respective locking means (7).

4. Locking device (1) according to claim 1, **characterised in that** the connecting element (4) has at least one recess (11) into which the actuating means (5), in particular the slide (6), penetrates at least partially in order to transfer the locking means (7) into the locking position.

5. Locking device (1) according to claim 1, **characterised in that** the base element (2) has a blind hole or a through-hole (13) into which the counter body (8) can penetrate at least partially.

6. Locking device (1) according to claim 5, **characterised in that** the blind hole or through-hole (13) has a rounded shape or a polygonal shape, and an end portion of the counter body (8) can have the matching rounded shape or polygonal shape.

7. Locking assembly according to claim 1, **characterised in that** the counter body (8) has a groove (12), in particular a circumferential groove, into which the locking means (7) can penetrate for locking.

8. Locking assembly according to claims 5 to 7, **characterised in that** the contact surfaces of the blind hole or through-hole (13) of the base element (2) with the circumferential groove (12) of the counter body (8) are in the form of slide bearings.

9. Locking device (1) according to claim 1, **characterised in that** the base element (2) can be connected to a wheel rim or a wheel mount.

## Revendications

1. Dispositif de verrouillage (1) pour le blocage amovible avec un corps antagoniste (8), comprenant un élément de base (2), qui est relié conjointement avec un élément de structure (3) et un élément de liaison (4), de préférence au moyen de vis, et un moyen d'actionnement (5), un ou plusieurs chariots (6) étant fixés au moyen d'actionnement (5), le moyen d'actionnement (5) avec les un ou plusieurs chariots (6) qui y sont fixés effectuant, par un actionnement du moyen d'actionnement (5), un mouvement relatif par rapport à l'élément de base (2) et pouvant être déplacé d'une position de déverrouillage à une position de verrouillage, les un ou plusieurs chariots (6) étant en contact avec un ou plusieurs moyens de verrouillage (7) et ceux-ci pouvant être transférés dans une géométrie antagoniste du corps antagoniste (8) lorsque le moyen d'actionnement (5) est déplacé dans la position de verrouillage, et le moyen d'actionnement (5) restant dans sa situation respective dans la position de déverrouillage ou dans la position de verrouillage grâce à des ressorts de rappel (9) des moyens de verrouillage (7) et à la tension qui en résulte ainsi qu'à une résistance de frottement entre les un ou plusieurs moyens de verrouillage (7) et les un ou plusieurs chariots (6), un dispositif de sécurité automatique étant prévu en tant que sécurité secondaire, configuré sous forme de boulon de sécurité (10) chargé par ressort, pour sécuriser la position du moyen d'actionnement (5) et empêcher une ouverture involontaire du dispositif de verrouillage (1).

2. Dispositif de verrouillage (1) selon la revendication 1, **caractérisé en ce que** le moyen de verrouillage (7) est agencé dans l'élément de base (2).

3. Dispositif de verrouillage (1) selon les revendications 1 et 2, **caractérisé en ce que** l'au moins un chariot (6) présente une forme de surface inclinée en biais, orientée vers le moyen de verrouillage (7) respectif.

4. Dispositif de verrouillage (1) selon la revendication 1, **caractérisé en ce que** l'élément de liaison (4) présente au moins un évidement (11), dans lequel le moyen d'actionnement (5), notamment le chariot (6), pénètre au moins partiellement pour transférer le moyen de verrouillage (7) dans la position de verrouillage.

5. Dispositif de verrouillage (1) selon la revendication 1, **caractérisé en ce que** l'élément de base (2) présente un trou borgne ou un trou traversant (13), dans lequel le corps antagoniste (8) peut pénétrer au moins partiellement.

6. Dispositif de verrouillage (1) selon la revendication 5, **caractérisé en ce que** ce trou borgne ou trou traversant (13) possède une forme ronde ou une forme polygonale et une section d'extrémité du corps antagoniste (8) peut présenter la forme ronde ou la forme polygonale qui lui correspond.

7. Agencement de verrouillage selon la revendication 1, **caractérisé en ce que** le corps antagoniste (8) présente une rainure (12), notamment périphérique, dans laquelle peut pénétrer le moyen de verrouillage (7) pour le verrouillage.

8. Agencement de verrouillage selon les revendications 5 à 7, **caractérisé en ce que** les surfaces de contact du trou borgne ou du trou traversant (13) de l'élément de base (2) vers la rainure périphérique (12) du corps antagoniste (8) sont réalisées sous forme de palier lisse.

9. Dispositif de verrouillage (1) selon la revendication 1, **caractérisé en ce que** l'élément de base (2) peut être relié à une jante de roue ou à un logement de roue.
